## Europäisches Patentamt

## European Patent Office

## Office européen des brevets

(19)

(11) Veröffentlichungsnummer: **0 175 082 B1**

(12) **EUROPÄISCHE PATENTSCHRIFT**

(45) Veröffentlichungstag der Patentschrift: 05.09.90

(21) Anmeldenummer: 85108797.3

(22) Anmeldetag: 13.07.85

(51) Int. Cl.⁵: **G 05 D 9/12**, B 67 D 1/04

(54) Schaltungsanordnung zum geregelten Auffüllen und Nachfüllen von Behältern mit Flüssigkeiten.

(30) Priorität: 22.08.84 DE 3430934

(43) Veröffentlichungstag der Anmeldung:
26.03.86 Patentblatt 86/13

(45) Bekanntmachung des Hinweises auf die
Patenterteilung:
05.09.90 Patentblatt 90/36

(84) Benannte Vertragsstaaten:
AT BE CH DE FR GB IT LI LU NL SE

(56) Entgegenhaltungen:
DE-A-2 541 148
FR-A-2 304 566
US-A-3 632 019

PATENT ABSTRACTS OF JAPAN, Band 7, Nr. 87
(P-190)1232r, 12. April 1983; & JP-A-58 14219
(HITACHI SEISAKUSHO K.K.) 27.01.1983

(73) Patentinhaber: Bosch-Siemens Hausgeräte
GmbH
Hochstrasse 17
D-8000 München 80 (DE)
(73) Patentinhaber: Coca-Cola Company
P.O.Drawer 1734
Atlanta Georgia 30301 (US)

(72) Erfinder: Aschberger, Matthias, Dipl.-Ing.
Am Läutenberg 9/1
D-7928 Giengen (DE)
Erfinder: Färber, Karlheinz, Dipl.-Ing.
Giegerweg 1
D-7928 Giengen (DE)
Erfinder: Deininger, Anton, Dipl.-Ing.
Vogtstrasse 2B
D-8887 Bachhagel (DE)

(74) Vertreter: Kessl, Josef et al
c/o Bosch-Siemens Hausgeräte GMBH Patent-
und Vertragswesen Hochstrasse 17
D-8000 München 80 (DE)

**Beschreibung**

Die vorliegende Erfindung bezieht sich auf eine Schaltungsanordnung zum bedarfsweisen Auffüllen bzw. Nachfüllen eines Vorratsbehälters mit Flüssigkeit, insbesondere eines Karbonisators in einem Getränkeautomaten mit Wasser, wobei dem Vorratsbehälter auf Abruf portionsweise Flüssigkeit entnehmbar ist und — gesteuert durch eine über einen elektronischen Flüssigkeitssensor mit Flüssigkeitsbedarfskriterien beaufschlagbare elektronische Steuerschaltung — eine Fördermengen-Steuervorrichtung Flüssigkeit nachfüllbar ist.

Es ist beispielsweise durch FR—A—2 304 566 bekannt, Mischgeräte unmittelbar vor dem Verbrauch durch wahlweise Mischung aus Getränkekonzentraten mit karbonisiertem Wasser herzustellen. Zur Bereitung dieses karbonisierten Wassers kann in bekannter Weise ein Vorratsbehälter Verwendung finden, welcher bevorzugterweise gekühlt wird. Diesem Vorratsbehälter sind karbonisierte Wassermengen bedarfsweise zur Erstellung der Mischgetränke zu entnehmen. Entsprechend müssen diesem Behälter die Bestandteile des karbonisierten Wassers, nämlich $CO_2$-Gas und Frischwasser, je nach Entnahme von karbonisiertem Wasser, zugeführt werden. Zur Zuführung von $CO_2$-Gas an diesen Vorratsbehälter ist dieser über eine Druckminder-Ventilanordnung mit einer $CO_2$-Versorgungsflasche verbunden. Zum Auf- und Nachfüllen des Vorratsbehälters mit Frischwasser ist dieser Vorratsbehälter an eine Wasserversorgungsleitung anzuschließen. Diese kann an ein allgemeines Wasserversorgungsnetz angeschlossen sein oder aber den Wasservorrat aus einem Wassertank zuführen. Eine Zulauf-Steuereinrichtung steuert die jeweils benötigte Zulaufmenge in Abhängigkeit des Wasserstands im Vorratsbehälter für das karbonisierte Wasser. Dieser Wasserstand wird durch Sensoren erfaßt, welche des einfachen Aufbaus wegen und der einfachen Signalverarbeitung durch eine nachgeschaltete Auswerteschaltung wegen, bevorzugt als Meßelektroden ausgebildet sind. Bei genügendem Wasserdruck in der Versorgungsleitung wird die Zulauf-Steuereinrichtung für das Frischwasser lediglich durch eine elektrisch ansteuerbare Ventilanordnung zu realisieren sein. Kann dagegen nicht gesichert davon ausgegangen werden, daß genügend Wasserdruck in der Versorgungsleitung andauernd zur Verfügung steht, so ist es erforderlich, eine Pumpenanordnung als Zulaufsteuereinrichtung, gegebenenfalls in Verbindung mit einer entsprechenden Ventilanordnung, vorzusehen. Der Wasserversorgungsdruck muß ausreichend hoch sein, da die Wasserversorgung zumindest beim Nachfüllen des Vorratsbehälters gegen den erhöhten $CO_2$-Gasdruck erfolgen muß.

Funktionseinheiten, wie elektrisch ansteuerbare Ventile als auch insbesondere Pumpenanordnungen, unterliegen in starkem Maße während der An- bzw. Abschaltvorgänge besonders hohen Belastungen. Insbesondere wenn diesen Schaltspielen relativ kurze Förderzeiten bzw. Pausenzeiten gegenüberstehen, wird dadurch der Verschleiß an diesen Funktionsteilen besonders nachteilig gefördert. Besonders unnötige und störende Schaltspiele der Fördermengen-Steuervorrichtung können sich dadurch ergeben, daß insbesondere im Zusammenhang mit dem Nachfüllen die Oberfläche des karbonisierten Wassers auch im Bereich des Wasserstands-Sensors auf und abbewegt wird.

Der vorliegenden Erfindung liegt nunmehr die Aufgabe zugrunde, Maßnahmen zu ergreifen, um die Schalthäufigkeit für die Fördermengen-Steuervorrichtung zu verringern. Dabei bestünde die Möglichkeit, Wasserstands-Sensoren zum Einsatz zu bringen, welche auf Schalter mit Schnappverhalten einwirken. Dadurch würde eine gewünschte Schalthysterese erzielbar sein. Diese Anordnungen sind jedoch herstellungsaufwendig. Zudem muß besondere Sorgfalt auf deren Funktionsfähigkeit insoweit gelegt werden, da mehrere bewegte und zu bewegende Teile sich dauerhaft funktionsfähig beeinflussen müssen. Bei der erfindungsgemäß zu findenden Anordnung sollte also von diesen Maßnahmen nicht Gebrauch gemacht werden. Vielmehr ist eine Schaltungsanordnung zu bevorzugen, welche die Wasserbedarfskriterien in Abhängigkeit von dem über Elektroden erfaßten Wasserstand ableitet und entsprechend davon die Fördermengen-Steuervorrichtungen ansteuern.

Eine Schaltungsanordnung, welche diesen Anforderungen genügt, ist erfindungsgemäß dadurch gekennzeichnet, daß in der Steuerstrecke zwischen dem elektronischen Flüssigkeits-Sensor und der Fördermengen-Steuervorrichtung zur Ansteuerung der Fördermengen-Steuervorrichtung eine Zeitsteuereinheit angeordnet ist, die durch einen mittels des Flüssigkeitssensors festgestellten Flüssigkeitsbedarf aktiviert wird, um die Fördermengen — Steuervorrichtung (9, 10) eine vorgegebene Zeitperiode kurzzeitig verlängert über die durch das Vorliegen eines Flüssigkeits bedarfs hinausgehende Zeitspanne zur Flüssigkeitnachfüllung anzusteuern.

Bei einer Schaltungsanordnung nach diesen erfindungsgemäßen Merkmalen können ausschließlich elektronische Schaltungsmaßnahmen zum Einsatz gebracht werden. Der als Meßelektrode in den Flüssigkeitsvorrat eintauchende Sensor bildet über die Flüssigkeit hin zusammen mit einer weiteren Elektrode oder insbesondere mit der diese Aufgabe übernehmenden metallischen Gehäusewandung, eine elektrisch veränderliche Meßstrecke mit analogem Ausgangspegel, wobei der Schwellwert durch Bereitstellung eines elektronischen Vergleichskriteriums über einen Differenzverstärker in digitale Signale umsetzbar ist. Die Zeitsteuereinheit kann ebenfalls mit einfachen bekannten elektronischen Mitteln realisiert werden. Je nach Fassungvermögen des Vorratsbehälters können unterschiedlich einstellbare Zeiten für den Nachlauf zweckmäßig sein. Bei einem Fassungsvolumen von ca. 2 Liter ergibt sich beispielsweise eine zweckmäßige Nachlaufzeit

2

von ca. 2 Sekunden. Weitere Maßnahmen sind zur aufgabengerechten Lösung der Erfindung nicht erforderlich.

Ein nach den Merkmalen der Erfindung ausgestaltetes Ausführungsbeispiel ist anhand der Zeichnung im folgenden näher beschrieben. Es zeigen:

Fig. 1 einen prinzipiellen Aufbau einer Getränke-Mischeinrichtung und

Fig. 2 eine Schaltungsanordnung zur Ansteuerung der Wasserversorgungs-Steuereinrichtung.

Ein Getränkeautomat zum Mischen von unterschiedlichen Getränkekonzentraten mit gekühltem $CO_2$-Wasser zu einem Mischgetränk enthält als wesentliche Bestandteile eine Mischrinne 1, in welcher der Mischvorgang eingeleitet bzw. durchgeführt wird, Getränkekonzentrats-Behälter 2, aus denen über Dosiereinrichtungen 3 die Getränkekonzentrate portionsweise der Mischrinne 1 zugeführt werden, und einen Vorratsbehälter 4 für gekühltes $CO_2$-Wasser, welches über ein Ausgabeventil 5 in die Mischrinne bedarfsweise einfließen kann. Die Getänkemischung verläßt die Mischrinne 1 über einen Auslauftrichter 6.

Der $CO_2$-Wasservorrat wird gekühlt durch Kältemittel, welche über eine um den Vorratsbehälter 4 gewickelte Rohrleitung 7 geleitet sind. Ergänzt wird der $CO_2$-Wasservorrat innerhalb des Behälters 4, um die über das Ausgabeventil 5 entnommenen Mengen dadurch, daß über eine Rohrleitung 8 — gesteuert über ein Ventilsystem 9, und unterstützt durch ein Pumpensystem 10 — Frischwasser und über eine Rohrleitung 11 aus einem Behälter 12 mit $CO_2$-Gasfüllung — gesteuert durch eine Ventilsystem 13 — $CO_2$-Gas zugeleitet wird. Das Pumpensystem 10 kann insbesondere auch deshalb erforderlich sein, da die Wasserförderung gegen den erhöhten, durch das $CO_2$-Gas beeinflußten Innendruck im Behälter 4 zu erfolgen hat. Der Wasserstand im Vorratsbehälter 4 wird über einen als Elektrode ausgebildeten Sensor 14 erfaßt. Durch den Überdeckungsgrad dieses Sensors 14 mit karbonisiertem Wasser ensteht in Verbindung mit der metallischen Gehäusewandung des Vorratsgefäßes 4 eine veränderliche Widerstandsstrecke.

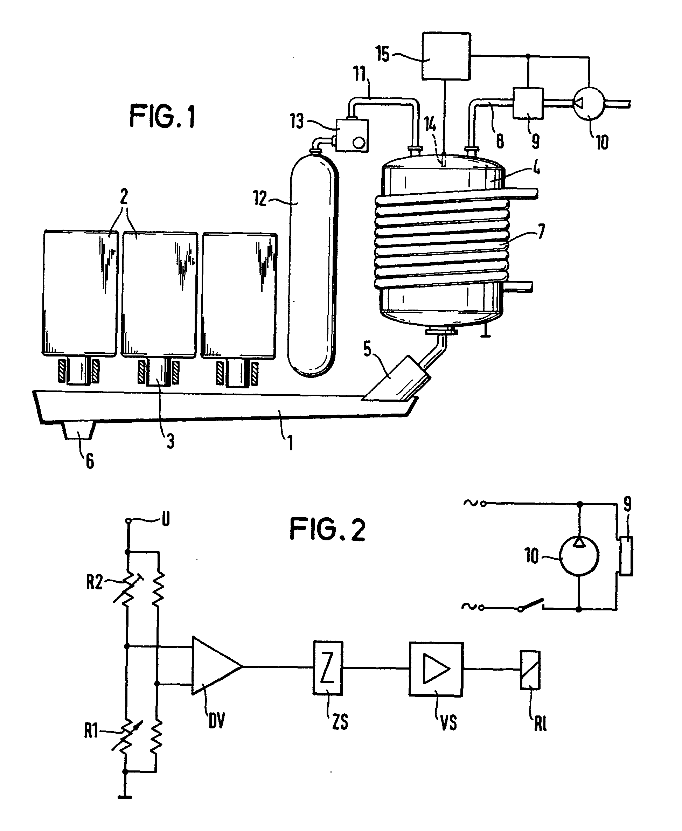

Diese veränderliche Widerstandsstrecke ist in der Schaltungsanordnung nach Fig. 2 als widerstandsveränderlicher Widerstand R1 symbolisiert. Der den jeweiligen Pegelstand des karbonisierten Wassers im Vorsatzbehälter 4 repräsentierende veränderliche Widerstandswert wird durch eine Auswerteschaltung 15, welche in Fig. 2 im erforderlichen Umfang näher dargestellt ist, erfaßt und zu Ansteuerzwecken für das Ventilsystem 9 und das Pumpensystem 10 verarbeitet. Im einzelnen sind die wesentlichen Funktionsteile der Steuerschaltung 15 in Fig. 2 dargestellt.

Mit einem zum Zwecke der Justage einstellbaren Widerstand R2 bildet der die Meßstrecke symbolisierende Widerstand R1 einen Spannungsteiler, dessen Mittenabgriff am Eingang eines Differenzverstärkers DV anliegt. Der Vergleichswert für den Differenzverstärker DV wird von einer weiteren Spannungsteilerstrecke, bestehend aus zwei Widerständen, geliefert. Wird ein Signal, welches einem Wasserbedarfskriterium entspricht, über den Differenzverstärker DV abgegeben, so wird über eine Zeitsteuerschaltung ZS und eine Verstärkersteuerung VS über ein Relais RL das Ventilsystem 9 und das Pumpensystem 10 in Betrieb gesetzt. Dadurch erfolgt eine Zuleitung und Förderung von Frischwasser über die Rohrleitung 8 in den Vorratsbehälter 4. Repräsentiert der Widerstandswert R1 einen vorgegebenen Wasserstandspegel im Behälter 4, so wird über den Differenzverstärker DV ein Negativ-Wasserbedarfskriterium an diese Zeitsteuerschaltung ZS abgegeben. Diese veranlaßt jedoch das Ventilsystem 9 und das Pumpensystem 10 für eine kurze Nachlaufzeit weiter aktiv zu bleiben und für eine weitere Förderung des Wasserzulaufs in den Vorratsbehälter 4 zu sorgen.

Nach Abschaltung dieser Zulaufsteuereinrichtungen hat der Wasserstand im Vorratsbehälter einen Pegel erreicht, welcher genügend über dem durch die Meßelektrode 14 erfaßten und durch die Beschaltung des Differenzverstärkers DV festgelegten Meßpegel liegt.

Im dargestellten und beschriebenen Ausführungsbeispiel sind die schaltungstechnischen Maßnahmen durch Funktionsbaugruppen, insbesondere in Form einer Zeitsteuerschaltung realisiert. Bevorzugt in Verbindung mit weiteren steuertechnischen Maßnahmen ist es jedoch zweckmäßig, bei Verfolgung der erfindungsgemäßen Lösung eine Mikroprozessor-Schaltung einzusetzen, welche die dargelegten Funktionsbaugruppen äquivalent einschließt.

**Patentansprüche**

1. Schaltungsanordnung zum bedarfsweisen Auffüllen bzw. Nachfüllen eines Vorratsbehälters (4) mit Flüssigkeit, insbesondere eines Karbonisators in einem Getränkeautomaten mit Wasser, wobei dem Vorratsbehälter auf Abruf portionsweise Flüssigkeit entnmehmbar ist und — gesteuert durch eine über einen elektronischen Flüssigkeitssensors (14, R1) mit Flüssigkeitsbedarfskriterien beaufschlagbare elektronische Steuerschaltung (15) — über eine Fördermengen-Steuervorrichtung (9, 10) Flüssigkeit nachfüllbar ist, dadurch gekennzeichnet, daß in der Steuerstrecke zwischen dem elektronischen Flüssigkeitssensor (14; R1) und der Fördermengen-Steuervorrichtung (9, 10) zur Ansteuerung der Fördermengen-Steuervorrichtung (9, 10) eine Zeitsteuereinheit (ZS) angeordnet ist, die durch einen mittels des Flüssigkeitssensors (14, R1) festgestellten Flüssigkeitsbedarf aktiviert wird, um die Fördermengen — Steuervorrichtung (9, 10) eine vorgegebene Zeitperiode kurzzeitig verlängert über die durch das Vorliegen eines Flüssigkeitsbedarfs hinausgehende Zeitspanne zur Flüssigkeitsnachfüllung anzusteuern.

2. Schaltungsanordnung nach Anspruch 1, dadurch gekennzeichnet, daß die schaltungstechnischen Maßnahmen, insbesondere die Zeitsteuerschaltung, innerhalb einer Mikroprozessor-Schaltung integriert realisiert sind.

## Revendications

1. Circuit pour le remplissage d'un réservoir (4) avec des liquides, notamment d'un réservoir de gazéification dans un distributeur de boissons avec de l'eau, du liquide pouvant être soutiré du réservoir par portions sur demande et du liquide pouvant être à nouveau introduit par un dispositif (9, 10) de commande de débit, sous la commande d'un circuit de commande (15) électronique pouvant être sollicité avec des critères de besoin de liquide par un capteur de liquide (14, R1), caractérisé par le fait que dans le trajet de commande entre le capteur de liquide (14, R1) et le dispositif (9, 10) de commande de débit est disposée, en vue de la commande du dispositif (9, 10) de commande de débit, une unité de commande temporisée (ZS) qui est activée par un besoin d'eau détecté au moyen du capteur de liquide (14, R1), afin de commander le dispositif (9, 10) de commande de débit, pour le remplissage, pendant une période de temps dépassant d'une courte valeur prédéterminée la durée de présence d'un besoin d'eau.

2. Circuit selon la revendication 1, caractérisé par le fait que les dispositions de circuit, notamment le circuit de commande temporisée, sont réalisées de façon intégrée dans un circuit à micro-processeur.

## Claims

1. Circuit arrangement for the filling or replenishing of a storage container (4) with liquid according to need, in particular a carbonator in an automatic beverage dispenser with water, wherein liquid is withdrawable on call portion by portion from the storage container and liquid is replenishable by way of a conveyed quantity control device (9, 10) under the control of an electronic control circuit (15) actable on by liquid need criteria by way of an electronic liquid sensor (14; R1), characterised thereby, that a timing control unit (ZS), which is activated by a need of liquid ascertained by means of the liquid sensor (14; R1) in order to drive the conveyed quantity control device (9, 10) prolonged for a brief time by a preset time period going beyond the time span for replenishment of liquid due to the presence of a need of liquid, for the driving of the conveyed quantity control device (9, 10) is arranged in the control path between the electronic liquid sensor (14; R1) and the conveyed quantity control device (9, 10).

2. Circuit arrangement according to claim 1, characterised thereby, that the circuit-technical measures, in particular the timing control circuit, are realised integrated with a microprocessor circuit.

EP 0 175 082 B1

# FIG.1

# FIG.2

1